(19) Europäisches Patentamt
European Patent Office
Office européen des brevets

(11) EP 1 927 830 B1

(12) EUROPEAN PATENT SPECIFICATION

(45) Date of publication and mention
of the grant of the patent:
21.07.2010 Bulletin 2010/29

(51) Int Cl.:
*G05B 19/406* (2006.01)     *G01H 1/00* (2006.01)

(21) Application number: 07023183.2

(22) Date of filing: 29.11.2007

(54) **Device for overall machine tool monitoring and corresponding method therefor**

Vorrichtung zur Gesamtüberwachung von Werkzeugmaschinen und entsprechendes Verfahren

Dispositif de surveillance globale d'une machine-outil et méthode associée

(84) Designated Contracting States:
CH DE FR GB LI

(30) Priority: 30.11.2006 JP 2006324584

(43) Date of publication of application:
04.06.2008 Bulletin 2008/23

(73) Proprietor: Panasonic Electric Works Co., Ltd.
Kadoma-shi
Osaka (JP)

(72) Inventor: Ikeda, Kazutaka
Kadoma-shi
Osaka (JP)

(74) Representative: Samson & Partner
Widenmayerstrasse 5
80538 München (DE)

(56) References cited:
US-A- 5 283 418     US-A1- 2006 122 809
US-B1- 6 398 914

• SMITH S D G ET AL: "Engineering and
manufacturing applications of ART-1 neural
networks" NEURAL NETWORKS, 1994. IEEE
WORLD CONGRESS ON COMPUTATIONAL
INTELLIGEN CE., 1994 IEEE INTERNATIONAL
CONFERENCE ON ORLANDO, FL, USA 27 JUNE-
2 JULY 1994, NEW YORK, NY, USA,IEEE, vol. 6,
27 June 1994 (1994-06-27), pages 3780-3785,
XP010127881 ISBN: 978-0-7803-1901-1

**Description**

The present invention relates to a device for overall machine tool monitoring and, more particularly, to a device for monitoring, prior to and during machining operation, an anomaly existence in the machine tool, and further for detecting a fault in the machine tool.

Conventionally, there has been known that a technique for detecting vibrations generated while a machine tool is machining, so that monitoring chatter vibrations and unbalance of a grinding stone and the like while the machine tool is machining has been considered. In order to detect the vibrations, an acceleration or an accustic emission is monitored (see, e.g., Japanese Patent Laid-open Application No.H8-261818).

Patent Reference discloses a technique for determining whether the chatter vibrations, unbalance of a grinding stone, or the like exist or not through monitoring a frequency spectrum. However, it is impossible for a person to monitor the frequency spectrum all the time. Therefore, it is not practical to be actually used in the machine tool. Automation of the determination is required for actual use in the machine tool, and a neural network or fuzzy logic may be used in the determination.

The neural network requires learning various states to determine various situations, but collecting training samples with respect to the situations which rarely occur is difficult. Therefore, the neural network has a problem that it takes long time to learn. Further, the fuzzy logic has a problem that it requires time to set a membership function.

In order to solve such problems, it could be considered that the neural network learns normal states of the machine tool, and then determines states except for the normal states to abnormal. However, the machine tool has totally different normal states depending on whether it is prior to performing machining operation or it is performing machining operation. Moreover, an anomaly can be also caused by a fault in the machine tool as well as an abnormal state of tool attachment or of contact between the tool and a workpiece. Therefore, classification is required to distinguish these states. If states except for the normal states are treated being oversimplified as an abnormal state, the classification is impossible.

US 2006/0122809 A1 refers to a system and method for detecting and analyzing anomalies in a machine during operation. The system includes at least one sensor configured to detect characteristics of the machine indicative of machine vibration and at least one sensor configured to detect characteristics of the machine indicative of other than machine vibration. The system further includes a plurality of neural networks and an expert system to receive output data from the neural networks and responsively analyze machine operation for anomalies.

In view of the above, the present invention provides a device for overall machine tool monitoring which is capable of distinguishing anomalies between occurring prior to machining operation and during machining operation and, moreover, capable of detecting a fault in the machine tool, even though neural networks learn only normal states of the machine tool.

In this configuration, the device includes the first neural network for classifying the prior racing operation into a normal state and an abnormal state so that whether an attachment state of a tool is normal or not can be determined. That is, unbalance in the attachment state of the tool or a fault in the tool can be detected by determining the anomaly in the tool. Further, the device includes the second neural network for classifying the operation during the machining operation into a normal state and an abnormal state so that an anomaly in a contact state of the tool to the workpiece can be detected by the second neural network. In other words, it is possible to detect anomalies such as self-induced vibrations or chatter vibrations generated depending on the relative position between the workpiece and the tool. Further, since the deviation history is obtained from the first and the second neural networks, tendency toward deteriorating performance of the machine tool or the tool can be obtained and, moreover, it is possible to determine a fault in the machine tool or a tool breakdown when the deviation deviates from the tendency toward deteriorating performance.

As afore mentioned, it can become independent of a person to detect an anomaly existing prior to and during the machining operation, and a fault in the machine tool, while the neural networks learning only normal categories are used, so that learning becomes easier. Therefore, taking time until an actual operation can be reduced and results with respect to anomalies requiring to be classified can be obtained, corresponding to respective classification.

Further, since a plurality of neural networks are used to classify a plurality of anomalies while a common signal input unit is used, the signal input unit does not need to be provided to every kind of the anomalies and a simpler configuration to implement the device can be possible.

In this configuration, since the vibrations from the machine tool are used to monitor whether an anomaly exist or not, even previous machine tools only need the vibration sensor being attached thereto.

In this configuration, a fault in the tool as well as tilt in an attachment position of the tool can be detected by using frequency components of the target signal as information on a state prior to machining operation. Further, since the frequency components of the envelop of the target signal are used as information during the machining operation, noise components such as accustic emissions generated during the machining operation are removed. As a result, a position relation between the tool and the workpiece can be easily obtained.

Since the competitive learning neural networks are used in this embodiment, simple configuration is possible and, moreover, learning can be simply carried out by colleting the training samples with respect to every category and assigning the training samples to respective categories.

The objects and features of the present invention will become apparent from the following description of embodiments given in conjunction with the accompanying drawings, in which:

Fig. 1 is a block diagram of an embodiment of the present invention; and
Fig. 2 illustrates a schematic configuration of a neural network used in the embodiment in Fig. 1.

Embodiments of the present invention will now be described with reference to the accompanying drawings which form a part hereof.

A machine tool exemplified in an embodiment described below has a tool rotatably driven by a driving unit. There are various kinds of machine tools for machining such as cutting or polishing in the machine tool. Any driving source using a motor can serve as the driving unit, and a proper power transmission unit such as a gearbox or a belt can be provided between the driving source and the tool. Hereinafter, a spindle with a housing is exemplified as the driving unit.

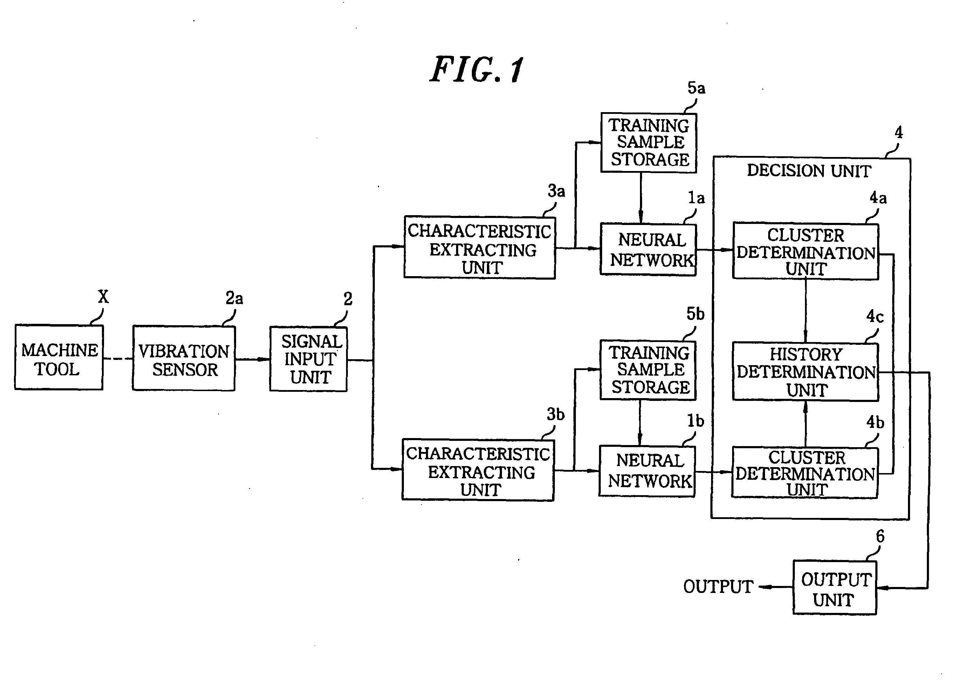

As shown in Fig. 1, a device for overall machine tool monitoring described in the present embodiment uses, e.g., unsupervised competitive learning neural networks 1a and 1b (hereinafter, simply referred to as neural networks if not otherwise necessary for some purpose). Supervised back propagation type neural networks can be also used as neural networks, but the unsupervised competitive learning neural networks are more appropriate for this purpose since the unsupervised competitive learning neural networks have simpler configuration than the supervised back propagation type, and training of the unsupervised competitive learning neural network can be made only once by using training samples of every category, or can be enhanced further by performing additional training.

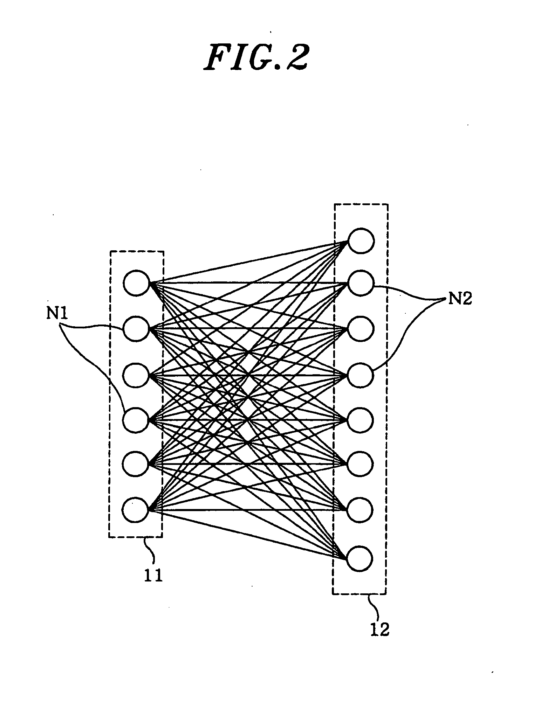

As shown in Fig. 2, each of the neural networks 1a and 1b has two layers, i.e., an input layer 11 and an output layer 12, and is configured such that every neuron N2 of the output layer 12 is connected to all neurons N1 of the input layer 11. In the embodiment, the neural networks 1a and 1b may be executed by an application program running at a sequential processing type computer, but a dedicated neuro-computer may be used.

Each of the neural networks 1a and 1b has two modes of operations, i.e., a training mode and a checking mode. After learning through proper training samples in the training mode, an amount of characteristics (check data) formed as a plurality of parameters generated from an actual target signal is classified into a category in the checking mode.

A coupling degree (weight coefficients) of the neurons N1 of the input layer 11 with the neurons N2 of the output layer 12 is variable. In the training mode, the neural networks 1a and 1b are trained through inputting training sample to the neural networks 1a and 1b so that respective weight coefficients of the neurons N1 of the input layer 11 with the neurons N2 of the output layer 12 are decided. In other words, every neuron N2 of the output layer 12 is assigned with a weight vector having weight coefficients associated with all the neurons N1 of the input layer 11 as elements of the weight vector. Therefore, the weight vector has same number of elements as the number of neurons N1 in the input layer 11, and the number of parameters of the amount of characteristics inputted to the input layer 11 is equal to the number of the elements of the weight vector.

Meanwhile, in the checking mode, when check data whose category needs to be decided is given to the input layer 11 of the neural networks 1a and 1b, a neuron having the shortest Euclidean distance between the its weight vector and the check data, is excited among the neurons N2 of the output layer 12. If categories are assigned to the neurons N2 of the output layer 12 in the training mode, a category of the check data can be recognized through a category of a location of the excited neuron N2.

The neurons N2 of the output layer 12 are associated with zones of respective two-dimensional cluster determination units 4a and 4b having 6 * 6 zones for example in one-to-one correspondence. Therefore, if categories of the training samples are associated with the zones of the cluster determination units 4a and 4b, a category corresponding to a neuron N2 excited by check data can be recognized through the cluster determination units 4a and 4b. Thus, the cluster determination units 4a and 4b can function as an output unit for outputting a classified result. Here, the cluster determination units 4a and 4b may be visualized by using a map.

When associating categories with each of the zones of the cluster determination units 4a and 4b (actually each of the neurons N2 of the output layer 12), trained neural networks 1a and 1b are operated in the reverse direction from the output layers 12 to the input layers 11 to estimate data assigned to the input layers 11 for every neuron N2 of the output layers 12. A category of a training sample having the shortest Euclidean distance with respect to the estimated data is used as a category of a corresponding neuron N2 in the output layer 12.

In other word, a category of a training sample having the shortest Euclidean distance with respect to a weight vector of a neuron N2 is used for a category of the corresponding neuron N2 of the output layer 12. As a result, the categories of the training samples are reflected to the categories of the neurons N2 of the output layer 12.

A large number of training samples (for example, 150 samples) are employed to each of the categories so that categories having similar attributes are arranged close together in the cluster determination units 4a and 4b. In other words, the neurons N2, excited in response to training samples belonging to a like category among the neurons N2 of the output layer 12, form a cluster formed of a group of neurons N2 residing close together in the cluster determination units 4a and 4b.

Cluster determination units 4a and 4b are originally the one in which clusters are formed in association with categories after training, but in this embodiment even the one before training is also called a cluster determination unit 4a or 4b so that both of them are not distinguished. The training samples given to the neural networks 1a and 1b operating in the training mode are stored in respective training sample storages 5a and 5b, and retrieved therefrom to be used in the respective neural networks 1a and 1b when necessary.

Information to be detected by using the neural networks 1a and 1b is whether an anomaly exists in racing operation before the machine tool X machines a workpiece or not, whether an anomaly exists in an operation during the machine tool X is machining a workpiece or not, and whether the machine tool X is out of work or not. Therefore, in order to classify anomalies before machining and during machining into categories, two neural networks 1a and 1b are provided for being used prior to machining operation and during machining operation respectively. The neural network 1a for being used prior to the machining operation learns only a normal state by using the training samples of a normal state prior to the machining operation. The neural network 1b for being used during machining operation learns only a normal state by using the training samples of a normal state during the machining operation.

Both of the neural networks 1a and 1b classify input data into categories according to whether the input data belong in normal categories or not. The cluster determination units 4a and 4b correspond to the neural networks 1a and 1b respectively, and the cluster determination unit 4a produces an output concerning whether an anomaly exists prior to the machining operation, while the cluster determination unit 4b produces an output concerning whether an anomaly exists during the machining operation.

A history determination unit 4c as well as the cluster determining units 4a and 4b is provided at a determination unit 4. The history determination unit 4c computes, with respect to each of the neural networks 1a and 1b, a deviation which is equivalent to an Euclidean distance between the input data and the weight coefficients associated with the neurons N2 of the output layer 12 in each of the neural networks 1a and 1b, and stores history of the computed deviation. The history determination unit 4c determines an anomaly existence (mostly, a fault) in the machine tool X if the deviation is greater than a preset threshold. Outputs of the cluster determination units 4a and 4b and the history determination unit 4c come out through the output unit 6. The method for computing the deviation will be described later.

Electric signals representing vibrations generated by the machine tool X are used as target signals and amounts of characteristics to be assigned to the neural networks 1a and 1b are extracted from the target signals by the respective characteristics extracting units 3a and 3b. In this embodiment, a vibration sensor 2 employing an acceleration pick-up is used to output the electric signals representing vibrations generated from the machine tool X. The output of the vibration sensor 2a is inputted to the signal input unit 2 and the target signal from which the amount of characteristics will be extracted is segmented by the signal input unit 2. A microphone or an accustic emission sensor may be used as a sensor for detecting vibrations of the machine tool X.

A tool of the machine tool X exemplified in this embodiment is rotatably driven by a driving unit so that an output of the vibration sensor 2a is periodic. An extracted amount of characteristics varies depending on a position, on a time axis, of the output of the vibration sensor 2a from which the amount of characteristics is extracted. Therefore, prior to the extraction of amounts of characteristics, the signal input unit 2 is required to regulate the positions where amounts of characteristics are extracted from outputs of the vibration sensor 2a.

In the present embodiment, the positions where amounts of characteristics are extracted are regulated by segmentation performed by the signal input unit 2 and the segmentation will be described later.

Therefore, the signal input unit 2 performs the segmentation of the target signal produced through the vibration sensor 2a on the time axis, e.g., by using a timing signal (trigger signal) synchronous with the operation of the machine tool X or by using wave characteristics of the target signal (for example, a start point and an end point of an envelop of the target signal).

The signal input unit 2 has an A/D converter for converting the electric signals produced through the vibration sensor 2a into digital signals and a buffer for temporarily storing the digital signals. The segmentation is performed on the signals stored in the buffer. Further, limitation of a frequency bandwidth or the like is performed in order to reduce noises when necessary. In the segmentation of the target signal, only a single segmented signal need not be outputted from one period of the target signal, but a plurality of segmented signals may be made per every proper unit time.

The segmented target signals by the signal input unit 2 are inputted to the characteristics extracting units 3a and 3b provided at the neural networks 1a and 1b respectively. The characteristics extracting units 3a and 3b extract one set of amount of characteristics including a plurality of parameters from one segmented signal. The amounts of characteristics can be adaptively extracted according to characteristics considered in the target signal. In the present embodiment, the characteristics extracting unit 3a for extracting the amount of characteristics from vibrations prior to machining operation extracts frequency components of the whole frequency bandwidth detected through the vibration sensor 2a (power at every frequency bandwidth) as the amount of characteristics, while the characteristics extracting unit 3b for extracting the amount of characteristics from vibrations during machining operation extracts frequency components from an envelop of the electric signal detected through the vibration sensor 2a.

The characteristics extracting units 3a and 3b may use FFT (Fast Fourier Transform) in order to extract the frequency components. Further, the characteristics extracting unit 3b performs equalization for extracting the envelop before extracting the frequency components. Frequency components to be used in the amount of characteristics are properly decided depending on the type of the machine tool to be employed.

The amounts of characteristics obtained from the characteristics extracting units 3a and 3b are stored in the respective training sample storages 5a and 5b when training samples are collected prior to the training mode. In the checking mode, the amounts of characteristics are provided to the neural networks 1a and 1b whenever the amounts of characteristics are extracted, wherein the amounts of characteristics are served as check data and the neural networks 1a and 1b classifies the check data into categories.

The data stored in the training sample storages 5a and 5b may be called a data set. It is clearly from described above that the training sample storage 5a corresponding the neural network 1a stores the data set obtained when the machine tool X is racing normally before machining a workpiece, while the training sample storage 5b corresponding the neural network 1b stores the data set obtained when the machine tool X is operating normally during machining the workpiece. The number of data forming the data set can be arbitrarily decided within a range of a capacity of each of the training sample storages 5a and 5b. However, it is preferable that about 150 of data are used to train each of the neural networks 1a and 1b as aforementioned.

Since only the set of data belonging to the normal categories is stored in the training data storages 5a and 5b, the neural networks 1a and 1b learn only a normal state if the neural networks 1a and 1b are trained by using the data set stored in the training sample storages 5a and 5b at the training mode. In other word, since only the normal categories are associated with the zones of the cluster determination units 4a and 4b, the aforementioned operating in the reverse direction after learning to setting categories can be omitted.

If the neural networks 1a and 1b are trained as aforementioned, every neuron N2 in the output layer 12 is assigned with a weight vector having the weight coefficients associated with all the neurons N1 of the input layer 11 as elements of the weight vector. Therefore, a training sample belonging to a category is assigned to the neural network 1a or 1b in the checking mode, a neuron N2 associated with the category is excited. However, since the training samples have difference with each other even though they are included in the same category, it is not the only one neuron N2 but a plural forming a cluster that excited by training samples (a data set) included in a single category.

When the check data extracted from the characteristics extracting units 3a and 3b are assigned to the respective neural networks 1a and 1b after the neural networks 1a and 1b complete learning in the training mode, whether the machine tool X is abnormal or not can be determined. It is preferable that a switching unit is provided between the signal input unit 2 and the characteristics extracting units 3a and 3b to select signal paths for assigning the check data obtained prior to the machining operation to the neural network 1a, and assigning the check data obtained during the machining operation to the neural network 1b. The switching unit may be configured by an analog switch and the like and synchronized with the operation of the machining tool X to select the signal paths according to the operation state, i.e., before the machining operation of a workpiece or during it.

By the operation aforementioned, the cluster determination unit 4a can detect an anomaly such as tool unbalance or loss prior to the machining operation. Further, the cluster determination unit 4b can detects an anomaly in a contact state between the tool and a workpiece during the machining operation. When the cluster determination unit 4a or 4b judges the anomaly, it is preferable that the output unit 6 drives a proper notifying unit to let a user know the anomaly. As for notifying the anomaly, blinking a lamp or generating alarm sounds may be preferable.

In the present embodiment, the history determination unit 4c is also provided at the determination unit 4. The history determination unit 4c stores the deviation with respect to each of the neural networks 1a and 1b so that it judges the anomaly in the machine tool X when the deviation with respect to one of the neural networks 1a and 1b is greater than the preset threshold. Mostly, the anomaly in the machine tool X means a fault in the machine tool X. The amount of data stored in the history determination unit 4c is preferably set by a time unit, e.g., per a day or per a week, but it may be determined by a specific number (e.g.,10000) of the check data.

Deviation is a normalized value of a magnitude of the difference vector between the amount of characteristics (characteristics vector) as the check data and the weight coefficients (weight vector) corresponding to each of the neurons N2 of the output layers 12 in the neural networks 1a and 1b. The deviation Y is defined as:

$$Y = ([x]/x - [Wwin]/Wwin) T ([x]/x - [Wwin]/Wwin),$$

where [X] is the characteristics vector; [Wwin] is the weight vector of neuron N2 corresponding to a category ([a] represents that "a" is a vector); T represents transpose; and X and Wwin which are not bracketed represent norms of the respective vectors. The normalization is carried out by elements of the vector are divided by the respective norms.

By employing the configuration of the present invention as aforementioned, based on the output of the vibrations sensor 2a, an anomaly in the attachment state of the tool (tool tilting or attachment miss) or an anomaly in the tool at the machine tool X is monitored prior to the machining operation, while the contact state of the tool to the workpiece at the machine tool X is monitored. Futher, an anomaly such as a fault in the machine tool X can be also monitored based on the history of the deviation.

Though the output of the vibration sensor 2a serves as the target signal in the embodiment aforementioned, a load current of a motor can be used as the target signal if the driving source of the machine tool X is a motor and if the motor is servo-controlled, an output of an Incoder provided to the motor may be used as the target signal.

While the invention has been shown and described with respect to the embodiments, it will be understood by those skilled in the art that various changes and modifications may be made without departing from the scope of the invention as defined in the following claims.

**Claims**

1.  A device for overall machine tool (X) monitoring comprising:

    a signal input unit (2) to which a target signal which is an electric signal representing vibrations generated from the machine tool (X) is inputted,
    a first and a second characteristics extracting units (3a, 3b) adapted for extracting amounts of characteristics having a plurality of parameters from the target signal;
    a first and a second neural networks (1a, 1b) adapted for classifying the amounts of characteristics extracted by the respective characteristics extracting units (3a, 3b) into categories; and
    a determination unit (4) adapted for determining an overall anomaly in the machine tool (X) by using a classification result from each of the neural networks (1a, 1b),
    **characterized in that** the first neural network (1a) is adapted to classify, into normal and abnormal categories, amounts of characteristics extracted from a target signal generated when the machine tool (X) is racing prior to machining a workpiece, and
    wherein the second neural network (1b) is adapted to classify, into normal and abnormal categories, amounts of characteristics extracted from a target signal generated while the machine tool (X) is machining the workpiece, and
    wherein the determination unit (4) is adapted to determine whether or not an anomaly in an attachment state of a tool exists before the machine tool (X) machines the workpiece based on the classification results from the first neural network (1a) and whether or not an anomaly in a contact state of the tool to the workpiece exists while the machine tool (X) is machining the workpiece based on the classification results from the second neural network (1 b), and whether or not there is a fault in the machine tool (X) itself, based on the classification results from the first and second neural networks (1a, 1b), first deviation which is a normalized value of a magnitude of the difference vector between weight coefficients of neurons in an output layer included in the first neural network (1a) and the amounts of characteristics extracted by the first characteristics extracting unit (3a), and second deviation which is a normalized value of a magnitude of the difference vector between weight coefficients of neurons in an output layer included in the second neural network (1b) and the amounts of characteristics extracted by the second characteristics extracting unit (3b), and
    wherein the determination unit (4) is adapted to determine that there exists the fault in the machine tool (X) if one of the first and the second deviation is greater than a preset threshold.

2.  The device for overall machine tool (X) monitoring of claim 1, the target signal is output of a vibration sensor (2a) attached to the machine tool (X).

3.  The device for overall machine tool (X) monitoring of claim 1 or 2, wherein the first characteristics extracting unit (3a) is adapted to extract frequency components from the target signal, and the second characteristics extracting unit (3b) is adapted to extract a frequency component of an envelop from the target signal.

4.  The device for overall machine tool (X) monitoring of any one of claims 1 to 3, wherein the first and the second neural networks (1a, 1b) are competitive learning neural networks.

5.  A monitoring method of overall machine tool comprising:

inputting a target signal which is an electric signal representing vibrations generated from the machine tool (X) to a signal input unit (2),

extracting amounts of characteristics having a plurality of parameters from the target signal by using a first and a second characteristics extracting units (3a, 3b);

classifying the amounts of characteristics extracted by the respective characteristics extracting units (3a, 3b) into categories in a first and a second neural networks (1 a, 1 b);

determining an overall anomaly in the machine tool (X) by using a classification result from each of the neural networks (1 a, 1 b) in a determination unit (4),

**characterized in that** the classifying includes classifying, into normal and abnormal categories, amounts of characteristics extracted from the first characteristics extracting unit (3a) with respect to a target signal generated when the machine tool (X) is racing prior to machining a workpiece in a first neural network (1a), and classifying, into normal and abnormal categories, amounts of characteristics extracted from the second characteristics extracting unit (3b) with respect to a target signal generated when the machine tool (X) is machining the workpiece in a second neural network (1 b),

wherein the determining includes determining whether or not an anomaly in an attachment state of a tool exists before the machine tool (X) machines the workpiece based on the classification results from the first neural network (1a), and whether or not an anomaly in a contact state of the tool to the workpiece exists while the machine tool (X) is machining the workpiece in the determination unit (4) based on the classification results from the second neural network (1b); and determining whether or not there is a fault in the machine tool (X) itself, based on the classification results from the first and the second neural networks (1a, 1b), first deviation which is a normalized value of a magnitude of the difference vector between weight coefficients of neurons in an output layer included in the first neural network (1a) and the amounts of characteristics extracted by the first characteristics extracting unit (3a), and second deviation which is a normalized value of a magnitude of the difference vector between weight coefficients of neurons in an output layer included in the second neural network (1b) and the amounts of characteristics extracted by the second characteristics extracting unit (3b) in the determination unit (4), and

wherein the determining whether or not there is a fault in the machine tool (X) performs determining that there exists the fault in the machine tool (X) if one of the first and second deviation is greater than a preset threshold.

6. The monitoring method of overall machine tool (X) of claim 5, wherein the extracting includes extracting frequency components from the target signal by using the first characteristics extracting unit (3a), and extracting a frequency component of an envelop from the target signal by using the second characteristics extracting unit (3b).

**Patentansprüche**

1. Vorrichtung zur Gesamtüberwachung einer Werkzeugmaschine (X), welche umfasst:

eine Signaleingabeeinheit (2), an die ein Zielsignal, das ein elektrisches Signal ist, das von der Werkzeugmaschine (X) erzeugte Vibrationen darstellt, eingegeben wird,

eine erste und eine zweite Merkmalsextrahiereinheit (3a, 3b), die ausgelegt ist, Mengen von Merkmalen, die eine Vielzahl von Parametern aufweisen, aus dem Zielsignal zu extrahieren;

ein erstes und zweites neuronales Netz (1a, 1b), die ausgelegt sind, die Mengen von Merkmalen, die von der jeweiligen Merkmalsextrahiereinheit (3a, 3b) extrahiert werden, in Kategorien zu extrahieren; und

eine Bestimmungseinheit (4), die ausgelegt ist, eine Gesamtanomalie in der Werkzeugmaschine (X) durch Verwenden eines Klassifizierungsergebnisses von jedem der neuronalen Netze (1a, 1b) zu bestimmen,

**dadurch gekennzeichnet, dass** das erste neuronale Netz (1 a) ausgelegt ist, Mengen von Merkmalen, die aus einem Zielsignal extrahiert werden, das erzeugt wird, wenn die Werkzeugmaschine (X) vor einem Bearbeiten eines Werkstücks läuft, in normale und anomale Kategorien zu klassifizieren, und

wobei das zweite neuronale Netz (1 b) ausgelegt ist, Mengen von Merkmalen die aus einem Zielsignal extrahiert werden, das erzeugt wird, während die Werkzeugmaschine (X) das Werkstück maschinell bearbeitet, in normale und anormale Kategorien zu klassifizieren, und

wobei die Bestimmungseinheit (4) ausgelegt ist zu bestimmen, ob eine Anomalie in einem Anbringungszustand eines Werkzeugs existiert oder nicht, bevor die Werkzeugmaschine (X) das Werkstück auf der Grundlage der Klassifizierungsergebnisse aus dem ersten neuronalen Netz (1a) maschinell bearbeitet, und ob eine Anomalie in einem Kontaktzustand des Werkzeugs zum Arbeitsstück existiert oder nicht, während die Werkzeugmaschine (X) das Werkstück auf der Grundlage der Klassifizierungsergebnisse aus dem zweiten neuronalen Netz (1 b) maschinell bearbeitet, und ob es einen Fehler in der Werkzeugmaschine (X) selbst gibt oder nicht, auf der Grundlage der Klassifizierungsergebnisse aus dem ersten und zweiten neuronalen Netz (1a, 1b), einer ersten Abweichung, die ein normalisierter Wert einer Größe des Differenzvektors zwischen Gewichtskoeffizienten von Neuronen in einer Ausgabeschicht ist, die in dem ersten neuronalen Netz (1 a) umfasst ist, und den Mengen von Merkmalen, die von der ersten Merkmalsextrahiereinheit (3a) extrahiert werden, und einer zweiten Abweichung, die ein normalisierter Vektor einer Größe des Differenzvektors zwischen Gewichtskoeffizienten von Neuronen in einer Ausgabeschicht, die in dem zweiten neuronalen Netz (1b) umfasst ist, und den Mengen von Merkmalen, die von der zweiten Merkmalextrahiereinheit (3b) extrahiert werden, und wobei die Bestimmungseinheit (4) ausgelegt ist, zu bestimmen, dass der Fehler in dem Werkzeugmaschine (X) existiert, falls die erste oder die zweite Abweichung größer als ein vorgegebener Schwellwert ist.

2. Vorrichtung zur Gesamtüberwachung einer Werkzeugmaschine (X) gemäß Anspruch 1, wobei das Zielsignal von einem Vibrationssensor (2a) ausgegeben wird, der an der Werkzeugmaschine (X) befestigt ist.

3. Vorrichtung zur Gesamtüberwachung einer Werkzeugmaschine (X) gemäß Anspruch 1 oder 2, wobei die erste Merkmalsextrahiereinheit (3a) ausgelegt ist, Frequenzkomponenten aus dem Zielsignal zu extrahieren und die zweite Merkmalsextrahiereinheit (3b) ausgelegt ist, eine Frequenzkomponente einer Einhüllenden aus dem Zielsignal zu extrahieren.

4. Vorrichtung zur Gesamtüberwachung einer Werkzeugmaschine (X) gemäß einem der Ansprüche 1 bis 3, wobei das erste und das zweite neuronale Netz (1a, 1 b) kompetitive lernende neuronale Netze sind.

5. Verfahren zur Gesamtüberwachung einer Werkzeugmaschine, welches umfasst:

Eingeben eines Zielsignals, das ein elektrisches Signal ist, das von der Werkzeugmaschine (X) erzeugte Vibrationen darstellt, an eine Signaleingabeeinheit (2),
Extrahieren von Mengen von Merkmalen, die eine Vielzahl von Parametern aufweisen, aus dem Zielsignal durch Verwenden einer ersten und zweiten Merkmalsextrahiereinheit (3a, 3b);
Klassifizieren der Mengen von Merkmalen, die von der jeweiligen Merkmalsextrahiereinheit (3a, 3b) extrahiert werden, in Kategorien in einem ersten und einem zweiten neuronalen Netz (1a, 1b);
Bestimmen einer Gesamtanomalie in der Werkzeugmaschine (X) durch Verwenden eines Klassifizierungsergebnisses aus jedem der neuronalen Netze (1 a, 1 b) in einer Bestimmungseinheit (4),
**dadurch gekennzeichnet, dass** das Klassifizieren ein Klassifizieren von Mengen von Merkmalen, die aus der ersten Merkmalsextrahiereinheit (3a) extrahiert werden, in normale und anormale Kategorien in einem ersten neuronalen Netz (1 a) umfasst, in Bezug auf ein Zielsignal, das erzeugt wird, wenn die Werkzeugmaschine (X) vor einem maschinellen Bearbeiten eines Arbeitsstücks läuft, und Klassifizieren in einem zweiten neuronalen Netz (1b) von Mengen von Merkmalen, die aus der zweiten Merkmalsextrahiereinheit (3b) extrahiert werden, in Bezug auf ein Zielsignal, das erzeugt wird, wenn die Werkzeugmaschine (X) das Werkstück maschinell bearbeitet,
wobei das Bestimmen ein Bestimmen umfasst, ob eine Anomalie in einem Anbringungszustand eines Werkzeugs existiert oder nicht, bevor die Werkzeugmaschine (X) das Werkstück auf der Grundlage der Klassifizierungsergebnisse aus dem ersten neuronalen Netz (1a) maschinell bearbeitet, und ob eine Anomalie in einem Kontaktzustand des Werkzeugs zu dem Werkstück existiert oder nicht, während die Werkzeugmaschine (X) das Werkstück maschinell bearbeitet, in der Bestimmungseinheit (4) auf der Grundlage der Klassifizierungseinheit aus dem zweiten neuronalen Netz (1 b); und Bestimmen, ob es einen Fehler in der Werkzeugmaschine (X) selbst gibt oder nicht, auf der Grundlage der Klassifizierungsergebnisse aus dem ersten und zweiten neuronalen Netz (1a, 1 b), einer ersten Abweichung, die ein normalisierter Wert einer Größe des Differenzvektors zwischen Gewichtskoeffizienten von Neuronen in einer Ausgabeschicht ist, die in dem ersten neuronalen Netz (1a) umfasst ist, und den Mengen von Merkmalen, die von der ersten Merkmalsextrahiereinheit (3a) extrahiert werden, und einer zweiten Abweichung, die ein normalisierter Wert einer Größe des Differenzvektors zwischen Gewichtskoeffizienten von Neuronen in einer Ausgabeschicht, die in dem zweiten neuronalen Netz (1 b) umfasst ist, und den Mengen von Merkmalen, die von der zweiten Merkmalsextrahiereinheit (3b) in der Bestimmungseinheit (4) extrahiert werden, und wobei das Bestimmen, ob es einen Fehler in der Werkzeugmaschine (X) gibt oder nicht, ein Bestimmen durchführt, dass der Fehler in der Werkzeugmaschine (X) existiert, falls die erste oder die zweite Abweichung größer als ein vorgegebener Schwellwert ist.

6. Verfahren zur Gesamtüberwachung einer Werkzeugmaschine gemäß Anspruch 5, wobei das Extrahieren ein Extrahieren von Frequenzkomponenten aus dem Zielsignal durch Verwenden der ersten Merkmalsextrahiereinheit (3a) und Extrahieren einer Frequenzkomponente einer Einhüllenden aus dem Zielsignal durch Verwenden der zweiten Merkmalsextrahiereinheit (3b) umfasst.

**Revendications**

1. Dispositif pour la surveillance d'une machine-outil (X) globale comprenant :

   ■ une unité d'entrée de signal (2) à laquelle un signal cible qui est un signal électrique représentant des vibrations générées par la machine-outil (X) est appliqué,
   ■ des première et deuxième unités d'extraction de caractéristiques (3a, 3b) adaptées pour extraire des quantités de caractéristiques comportant une pluralité de paramètres du signal cible ;
   ■ des premier et deuxième réseaux neuronaux (1a, 1b) adaptés pour classer les quantités de caractéristiques extraites par les unités d'extraction de caractéristiques (3a, 3b) respectives dans des catégories ; et
   ■ une unité de détermination (4) adaptée pour déterminer une anomalie globale dans la machine-outil (X) en utilisant un résultat de classification de chacun des réseaux neuronaux (1a, 1b),

   **caractérisé en ce que** le premier réseau neuronal (1a) est adapté pour classer, dans des catégories normale et anormale, des quantités de caractéristiques extraites d'un signal cible généré lorsque la machine-outil (X) est lancée avant d'usiner une pièce de fabrication, et
   dans lequel le deuxième réseau neuronal (1b) est adapté pour classer, dans des catégories normale et anormale, des quantités de caractéristiques extraites d'un signal cible généré alors que la machine-outil (X) usine la pièce de fabrication, et
   dans lequel l'unité de détermination (4) est adaptée pour déterminer si, oui ou non, une anomalie existe dans un état de fixation d'un outil avant que la machine-outil (X) n'usine la pièce de fabrication sur la base des résultats de classification du premier réseau neuronal (1a) et si, oui ou non, une anomalie existe dans un état de contact de l'outil avec la pièce de fabrication alors que la machine-outil (X) usine la pièce de fabrication sur la base des résultats de classification du deuxième réseau neuronal (1b), et s'il y a ou non un défaut dans la machine-outil (X) elle-même, sur la base des résultats de classification des premier et deuxième réseaux neuronaux (1a, 1b), d'un premier écart qui est une valeur normalisée d'une amplitude du vecteur de différence entre des coefficients de pondération de neurones dans une couche de sortie incluse dans le premier réseau neuronal (1a) et les quantités de caractéristiques extraites par la première unité d'extraction de caractéristiques (3a) et d'un deuxième écart qui est une valeur normalisée d'une amplitude du vecteur de différence entre les coefficients de pondération de neurones dans une couche de sortie incluse dans le deuxième réseau neuronal (1b) et les quantités de caractéristiques extraites par la deuxième unité d'extraction de caractéristiques (3b), et
   dans lequel l'unité de détermination (4) est adaptée pour déterminer qu'il y a un défaut dans la machine-outil (X) si l'un des premier et deuxième écarts est supérieur à un seuil présélectionné.

2. Dispositif pour la surveillance d'une machine-outil (X) globale selon la revendication 1, dans lequel le signal cible est délivré par un capteur de vibration (2a) fixé à la machine-outil (X).

3. Dispositif pour la surveillance d'une machine-outil (X) globale selon la revendication 1 ou 2, dans lequel la première unité d'extraction de caractéristiques (3a) est adaptée pour extraire des composantes de fréquence du signal cible, et la deuxième unité d'extraction de caractéri-tiques (3b) est adaptée pour extraire une composante de fréquence d'une enveloppe du signal cible.

4. Dispositif pour la surveillance d'une machine-outil (X) globale selon l'une quelconque des revendications 1 à 3, dans lequel les premier et deuxième réseaux neuronaux (1a, 1b) sont des réseaux neuronaux à apprentissage compétitif.

5. Procédé de surveillance de machine-outil globale consistant à :

   ■ appliquer un signal cible qui est un signal électrique représentant des vibrations générées par la machine-outil (X) à une unité d'entrée de signal (2),
   ■ extraire des quantités de caractéristiques comportant une pluralité de paramètres du signal cible en utilisant des première et deuxième unités d'extraction de caractéristiques (3a, 3b) ;
   ■ classer les quantités de caractéristiques extraites par les unités d'extraction de caractéristiques (3a, 3b) respectives dans des catégories dans des premier et deuxième réseaux neuronaux (1a, 1b) ;
   ■ déterminer une anomalie globale dans la machine-outil (X) en utilisant un résultat de classification de chacun des réseaux neuronaux (1a, 1b) dans une unité de détermination (4),

**caractérisé en ce que** la classification consiste à classer, dans des catégories normale et anormale, des quantités de caractéristiques extraites de la première unité d'extraction de caractéristiques (3a) en relation avec un signal cible généré lorsque la machine-outil (X) est lancée avant l'usinage d'une pièce de fabrication dans un premier réseau neuronal (1a), et à classer, dans des catégories normale et anormale, des quantités de caractéristiques extraites de la deuxième unité d'extraction de caractéristiques (3b) en relation avec un signal cible généré lorsque la machine-outil (X) usine la pièce de fabrication dans un deuxième réseau neuronal (1b),

dans lequel la détermination consiste à déterminer si, oui ou non, une anomalie existe dans un état de fixation d'un outil avant que la machine-outil (X) n'usine la pièce de fabrication sur la base des résultats de classification du premier réseau neuronal (1a), et si, oui ou non, une anomalie existe dans un état de contact de l'outil avec la pièce de fabrication alors que la machine-outil (X) usine la pièce de fabrication dans l'unité de détermination (4) sur la base des résultats de classification du deuxième réseau neuronal (1b) ; et à déterminer s'il existe ou non un défaut dans la machine-outil (X) elle-même, sur la base des résultats de classification des premier et deuxième réseaux neuronaux (1a, 1b), d'un premier écart qui est une valeur normalisée d'une amplitude du vecteur de différence entre des coefficients de pondération de neurones dans une couche de sortie incluse dans le premier réseau neuronal (1a) et les quantités de caractéristiques extraites par la première unité d'extraction de caractéristiques (3a), et d'un deuxième écart qui est une valeur normalisée d'une amplitude du vecteur de différence entre des coefficients de pondération de neurones dans une couche de sortie incluse dans le deuxième réseau neuronal (1b) et les quantités de caractéristiques extraites par la deuxième unité d'extraction de caractéristiques (3b) dans l'unité de détermination (4), et

dans lequel la détermination de l'existence ou non d'un défaut dans la machine-outil (X) consiste à déterminer qu'il existe le défaut dans la machine-outil (X) si l'un des premier et deuxième écarts est supérieur à un seuil présélectionné.

6. Procédé de surveillance d'une machine-outil (X) globale selon la revendication 5, dans lequel l'extraction consiste à extraire des composantes de fréquence du signal cible en utilisant la première unité d'extraction de caractéristiques (3a), et extraire une composante de fréquence d'une enveloppe du signal cible en utilisant la deuxième unité d'extraction de caractéristiques (3b).

## FIG. 1

EP 1 927 830 B1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8261818 A
- US 20060122809 A1